# EUROPÄISCHE PATENTSCHRIFT

(11) **EP 3 125 398 B1**
(45) Veröffentlichungstag und Bekanntmachung des Hinweises auf die Patenterteilung: **13.05.2020**
(21) Anmeldenummer: 16177856.8
(22) Anmeldetag: 04.07.2016
(51) Int. Cl.: H02J 3/38

(54) **EIGENBEDARFSSTEUERUNG FÜR EINE WINDENERGIEANLAGE**
INTERNAL REQUIREMENTS MANAGEMENT FOR A WIND TURBINE
GESTION DES BESOINS D'AUTOCONSOMMATION POUR UNE EOLIENNE

(30) Priorität: 31.07.2015 DE 102015009742
(43) Veröffentlichungstag der Anmeldung: 01.02.2017
(73) Patentinhaber: Senvion GmbH, 22297 Hamburg (DE)
(72) Erfinder: LETAS, Heinz-Hermann, 24796 Bovenau (DE)
(74) Vertreter: Glawe, Delfs, Moll

(56) Entgegenhaltungen:
- EP-A2- 2 644 885
- WO-A1-2011/023238

## Beschreibung

Die Erfindung betrifft eine Windenergieanlage umfassend ein Eigenbedarfsnetz zur Versorgung elektrisch betriebener Komponenten der Windenergieanlage mit einer Eigenbedarfssteuerung zum Regeln der Spannung im Eigenbedarfsnetz. Die Erfindung erstreckt sich ferner auf ein Verfahren zum Betreiben der Eigenbedarfssteuerung für die Windenergieanlage. Ferner bezieht sich die Erfindung auf einen entsprechend ausgerüsteten Windpark sowie ein Computerprogrammprodukt zur Durchführung des Verfahrens.

Windenergieanlagen moderner Bauart weisen eine Vielzahl von elektrischen Komponenten auf, die für einen ordnungsgemäßen Betrieb der Windenergieanlage erforderlich sind. Dazu gehören bspw. eine Azimutverstelleinrichtung, welche die Ausrichtung der Gondel relativ zum Wind so nachführt, dass ein Windrotor der Windenergieanlage stets in Windrichtung ausgerichtet ist, sowie bspw. eine Blattheizung, um die Windenergieanlage auch im Winterbetrieb gegenüber schädlicher Vereisung zu schützen, sowie eine Betriebssteuerung, welche die Komponenten der Windenergieanlage überwacht und deren Betrieb steuert und ggf. erforderliche Kommunikation durchführt mit übergeordneten Einheiten, wie bspw. einen Windparkmaster oder einer Leitstelle des Übertragungsnetzbetreibers. Die zur Versorgung der Komponenten erforderliche elektrische Leistung wird als Eigenbedarf bezeichnet.

Es ist bekannt, die für den Betrieb dieser Komponenten erforderliche elektrische Leistung aus dem Leistungskreis der Windenergieanlage zu entnehmen, über dem sie die von ihr an sich generierte Leistung in ein Netz einspeist. Um die Versorgung der eigenen Komponenten mit einem möglichst vorgegebenen Spannungsniveau zu gewährleisten, ist eine Eigenbedarfssteuerung vorgesehen. Dazu ist bekannt, einen Transformator zum Übertragen von elektrischer Leistung aus dem Leistungskreis in das Netz für den Eigenbedarf vorzusehen. Transformatoren haben bekanntlich ein festes Spannungsübersetzungsverhältnis. Dies ist ungünstig, da die mit Eigenbedarfsleistung zu versorgenden Komponenten der Windenergieanlagen in der Regel eine geringere Spannungstoleranz aufweisen als die Toleranz für das Versorgungsnetz beträgt. Es ist daher erforderlich, Spannungsschwankungen, wie sie aufgrund der großen Toleranzen in dem Leistungskreis für das Versorgungsnetz auftreten können, auf ein geringeres Maß einzuschränken. Es ist bekannt, hierzu bspw. einen Stelltransformator heranzuziehen, um sich so stufenweise an die Netzspannung anzupassen.

Jedoch weist eine solche, aus dem Stand der Technik bekannte und in diesem Sinne herkömmliche Eigenbedarfssteuerung den Nachteil auf, dass sie eine recht große Reaktionszeit aufweist. Damit ist sie nicht befähigt, auf dynamische Spannungsänderungen ausreichend schnell zu reagieren. Dies gilt insbesondere im Hinblick auf plötzliche im Netz auftretende Überspannungen, wobei die Windenergieanlage anforderungsgemäß zumindest zeitweise mit dem Netz verbunden bleibt (OVRT - Over Voltage Ride Through). Bei den aus dem Stand der Technik bekannten Anlagen besteht hierbei die Gefahr, dass nicht hinreichend schnell durch die konventionelle Eigenbedarfssteuerung reagiert werden kann, sodass es zu unzulässiger Überspannung im Eigenbedarfsnetz kommen kann mit der Folge kritischer Belastungen und ggf. sogar Beschädigung der versorgten Komponenten der Windenergieanlage.

Aufgabe der Erfindung ist die Eigenbedarfssteuerung für Windenergieanlagen der eingangs genannten Art zu verbessern und ein entsprechendes Betriebsverfahren bereitzustellen.

Bei einer Windenergieanlage mit einem Windrotor, einem davon angetriebenen Generator zur Erzeugung elektrischer Leistung und einer Anschlussleitung zur Abgabe der elektrischen Leistung an ein Netz, weiter umfassend ein Eigenbedarfsnetz zur Versorgung von elektrisch betriebenen Komponenten der Windenergieanlage, das über eine Speiseleitung aus der Anschlussleitung gespeist ist und eine Eigenbedarfssteuerung zur Steuerung der Spannung im Eigenbedarfsnetz aufweist, ist erfindungsgemäß vorgesehen ein Widerstandsmodul in der Speiseleitung, das mehrpfadig ausgeführt ist und einen Widerstandspfad mit einem Serienwiderstand und einen parallelen Schaltpfad mit einem steuerbaren elektronischen Schalter umfasst, der zur Betätigung in einem Überspannungszustand und zur Überbrückung des Serienwiderstands im Ruhezustand ausgebildet ist.

WO 2011/023238 A1 zeigt eine Schaltung zum Schutz einer Windkraftanlage vor Überspannungen.

EP 2 644 885 A2 zeigt eine Windkraftanlage, die ebenfalls einen Überspannungsschutz vorsieht.

Nachfolgend seien zuerst einige verwendete Begriffe erläutert: Unter einem Serienwiderstand wird ein in eine Leitung eingeschleifter Widerstand verstanden.

Unter einem elektronischen Schalter wird ein nicht-mechanischer Schalter verstanden, vorzugsweise ein Halbleiterschalter, wie Thyristoren, GTO, IGCT, IGBT etc. Derartige elektronische Schalter weisen Schaltgeschwindigkeiten auf, die beträchtlich kürzer als 10 ms sind, typischerweise 1 ms oder weniger.

Der Kern der Erfindung beruht darauf, mit dem Widerstandsmodul eine auftretende Überspannung, wie sie insbesondere im Fall eines sogenannten OVRT schlagartig auftreten kann, kontrolliert soweit abzubauen, dass die Spannung im Eigenbedarfsnetz noch im tolerierbaren Bereich bleibt. Indem ein elektronischer Schalter für das Widerstandsmodul vorgesehen ist, können sehr schnelle Reaktionszeiten erreicht werden. Die sich hierbei ergebenden Anregelzeiten sind kürzer als eine Periodendauer im Netz (bei einem 50 Hz-Netz kürzer als 20 ms), typischerweise sind sie beträchtlich kleiner und betragen etwa 1 ms oder weniger. Im Ruhezustand ist der Schalter geschlossen, sodass der Serienwiderstand überbrückt ist und der Stromfluss zur Versorgung des Eigenbedarfsnetzes nicht beeinflusst ist. Insoweit gilt, dass die Spannung im Eigenbedarfsnetz derjenigen in der Speiseleitung folgt. Wird jedoch der elektronische Schalter betätigt, sodass er öffnet, dann wirkt der Serienwiderstand als Vorwiderstand, über den ein Spannungsabfall entsteht. Dessen Höhe ist abhängig von dem Widerstandswert einerseits und von dem Stromfluss andererseits. Die in der Speiseleitung anliegende, zu hohe Spannung wird um diesen Spannungsabfall vermindert, sodass im Eigenbedarfsnetz nur noch eine geringere Spannung anliegt. Im Überspannungsfall (außerhalb des Toleranzbands für das Eigenbedarfsnetz) braucht der Schalter nur betätigt zu werden, wodurch er öffnet und der Vorwiderstand wirkt. Damit ist auf äußerst einfache und zugleich effektive Weise ein Schutz des Eigenbedarfsnetzes vor schädlichen Überspannungen erreicht.

Durch das Vorsehen des elektronischen Schalters in Kombination mit dem Vorwiderstand wird aber nicht nur eine schnelle und wirksame Überspannungsreduktion erreicht, sondern sie ist auch ausgesprochen zuverlässig und verschleißfest. Denn gegenüber bisher verwendeten, mechanischen Schaltern erlaubt der vorgesehene elektronische Schalter eine nahezu unbegrenzte Anzahl von Schaltspielen. Dies kann vorzugsweise dazu genutzt werden, dass eine Steuerschaltung zur Betätigung des elektronischen Schalters diese moduliert ansteuert. Insbesondere kann dies erfolgen mittels eines Pulsweitenmodulators (PWM). Auf diese Weise kann der effektiv wirksame Widerstand des Widerstandsmoduls durch Verändern des Tastverhältnisses quasi stufenlos eingestellt werden, von einer Widerstandswirkung von Null stufenlos bis hin zu dem tatsächlichen Widerstandswerts des Serienwiderstands. Das Widerstandsmodul wird hierdurch zu einem variablen Widerstandsmodul. Dies ermöglicht eine besonders feinfühlige Reaktion auf Überspannungen, wobei auch die aktuelle im Eigenbedarfsnetz wirkende Lastsituation und damit der durch die Speiseleitung fließende Strom berücksichtigt werden kann. Zweckmäßigerweise ist hierzu ein Spannungsbegrenzungsregler vorgesehen, welcher der Steuerschaltung vorgeschaltet ist. Im Spannungsbegrenzungsregler kann als Eingangssignal das Messsignal einer Spannungsmesseinrichtung an der Anschlussleitung zugeführt sein. Es wird dann die Steuerschaltung von dem Spannungsbegrenzungsregler so betätigt, dass über das variable Widerstandsmodul ein solcher Spannungsabfall in einer solchen Höhe erfolgt, dass die Spannung im Eigenbedarfsnetz im zulässigen Bereich bleibt.

Mit der Erfindung wird insbesondere erreicht, dass während der Überspannungszeit die Ausgangsspannung am Ende des variablen Widerstandsmoduls und damit die Spannung im Eigenbedarfsnetz begrenzt werden kann. Im Normalbetrieb hingegen gehen von dem Widerstandsmodul dank der Überbrückung durch den Schalter keine Beeinträchtigungen hervor. Im Bedarfsfall kann dank des elektronischen Schalters sehr schnell reagiert werden, vorzugsweise im Bereich einer Millisekunde oder weniger. Es wird damit ein sehr wirksamer Schutz vor schädlicher Überspannung erreicht.

Bei mehrphasigen Systemen kann für jede Phase ein eigenes, vorzugsweise variables Widerstandsmodul vorgesehen sein. Bei Bedarf kann auch jede Phase individuell gesteuert werden. Der Begrenzungswert, auf den die Spannung im Eigenbedarfsnetz maximal ansteigen darf, ist an sich frei wählbar. Weiter liegt ein großer praktischer Vorteil der erfindungsgemäßen Ausführung darin, dass der Serienwiderstand des Widerstandsmoduls nur während einer Überspannungszeit belastet ist, und er im Ruhezustand thermisch überhaupt nicht belastet wird. Damit stehen seine vollen thermischen Reserven für den Überspannungsfall zur Verfügung.

Zweckmäßigerweise weist das Widerstandsmodul einen weiteren parallelgeschalteten Pfad mit einem LC-Glättungsfilter auf. Das LC-Filter dient als Energiespeicher und glättet die Auswirkungen durch das schnelle Schalten des elektronischen Schalters. Es wird so erreicht, dass an dem Ausgang des variablen Widerstandsmoduls ein zeitlicher Mittelwert des Widerstands entsprechend dem Tastverhältnis des elektronischen Schalters wirksam wird. Auf diese Weise ist der durch die Wahl des Tastverhältnisses frei einstellbare Spannungsabfall geglättet.

Zweckmäßigerweise weist der Spannungsregler eine schnelle Regelung auf, deren Zeitkonstante kürzer ist als eine Periode der Netzfrequenz. Damit kann quasi augenblicklich eine sehr schnell wirkende Regelung realisiert sein. Alternativ kann aber auch eine langsame Regelung mit einer Vorsteuerung für den Spannungsregler vorgesehen sein. An deren Eingang ist ein Signal für einen Stromfluss in das Eigenbedarfsnetz angelegt. Damit wird basierend auf dem Wert für die aktuelle Strombedarf des Eigenbedarfsnetzes und dem Widerstand des variablen Widerstandsmoduls ein Vorsteuerungswert berechnet, und dementsprechend als Ausgangssignal von dem Spannungsregler an die Steuerschaltung ausgegeben, welche mit einem entsprechenden PWM-Signal den elektronischen Schalter ansteuert. Bei dieser Ausführungsform wird die aktuelle Last im Eigenbedarfsnetz berücksichtigt, sodass eine extrem schnelle Regelung nicht erforderlich ist. Es genügt eine langsam wirkende Spannungsregelung mit einer Zeitkonstante, die länger sein kann als eine Periode der Netzfrequenz.

Ist für jede Phase in einem Mehrphasensystem ein eigenes, vorzugsweise variables Widerstandsmodul vorgesehen, so sind zweckmäßigerweise diese von einem gemeinsamen Spannungsbegrenzungsregler global angesteuert. Zweckmäßig ist eine Ausführung mit einem mehrphasigen Spannungsmessmodul, welches zur Bildung eines umlaufenden Spannungszeigers ausgebildet ist.

Vorzugsweise weist die Spannungsbegrenzungsregelung ein Oberschwingungsfilter auf. Auf diese Weise werden Oberschwingungen nicht ausgeregelt, sodass Oberschwingungen im Eigenbedarfs-Strom entsprechende Oberschwingungen in der Ausgangsspannung bewirken können. Auf diese Weise wird die Regelung entlastet.

Die Erfindung erstreckt sich auch auf eine Windenergieanlagen-Eigenbedarfssteuerung zur Versorgung des Eigenbedarfsnetzes von Windenergieanlagen. Zur näheren Erläuterung wird auf vorstehende Beschreibung verwiesen.

Die Erfindung erstreckt sich ferner auf ein Verfahren zum Regeln der Spannung in einem Eigenbedarfsnetz einer Windenergieanlage. Zur näheren Erläuterung wird auf vorstehende Beschreibung verwiesen.

Die Erfindung ist in unabhängigen Ansprüchen 1, 11 und 13 definiert. Die Erfindung wird nachfolgend unter Bezugnahme auf die beigefügte Zeichnung näher erläutert, in der ein vorteilhaftes Ausführungsbeispiel dargestellt ist. Es zeigen:
- Fig. 1:: eine vereinfachte schematische Darstellung einer erfindungsgemäßen Windenergieanlage;
- Fig. 2:: eine vereinfachte schematisierte Darstellung einer Versorgung eines Eigenbedarfsnetzes;
- Fig. 3 a-b:: verschiedene Ausführungsformen für ein Widerstandsmodul zur Versorgung;
- Fig. 4 a-d:: verschiedene Ausführungen für einen steuerbaren elektronischen Schalter;
- Fig. 5:: ein Blockdiagramm darstellend Steuerschaltung und Spannungsbegrenzungsregler für das Widerstandsmodul;
- Fig. 6:: Diagramme zur Darstellung der elektrischen Größen;
- Fig. 7:: ein weiteres Blockdiagramm für eine dreiphasige Ausführung;
- Fig. 8 a-g:: Diagramme zur Darstellung der Wirkungsweise in einem symmetrischen Störungsfall; und
- Fig. 9 a-g:: Diagramme zur Darstellung der Wirkungsweise in einem asymmetrischen Störungsfall.

Eine in ihrer Gesamtheit mit der Bezugsziffer 1 bezeichnete Windenergieanlage gemäß einem Ausführungsbeispiel der Erfindung umfasst einen Turm 10 mit einer in Azimutrichtung schwenkbar angeordneten Gondel 11 an dessen oberen Ende. An einer Stirnseite der Gondel 11 ist ein Windrotor 12 mit verstellbaren Blättern 13 angeordnet, der über eine nicht dargestellte Rotorwelle einen Generator 14 mit angeschlossenem Umrichter 15 zur Erzeugung elektrischer Leistung antreibt. Diese erzeugte elektrische Leistung wird mittels einer Anschlussleitung 17 über einen am Turmfuß der Windenergieanlage 1 angeordneten Transformator 18 an ein Netz 19 (parkinternes Netz oder elektrisches Übertragungsnetz) abgegeben wird.

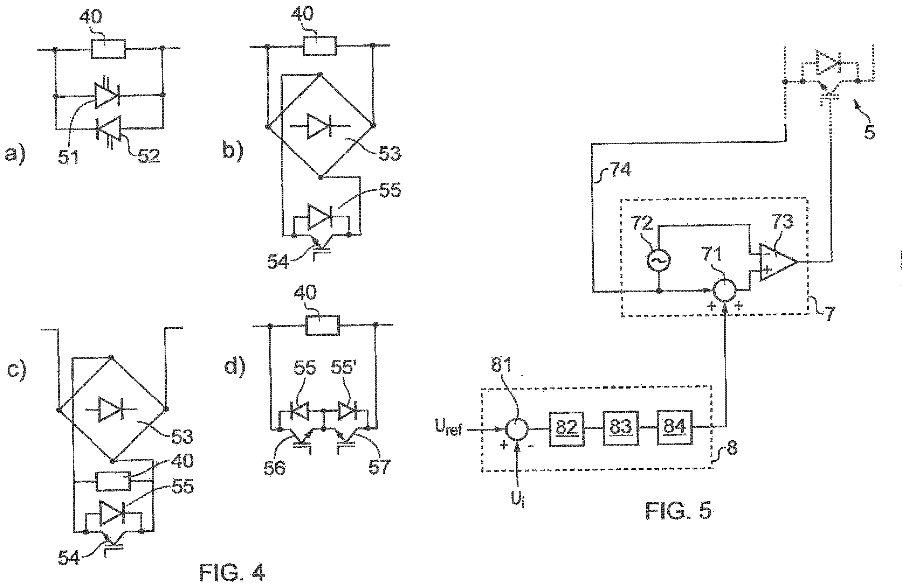

Für die Durchführung des Betriebs umfasst die Windenergieanlage eine Mehrzahl von Komponenten 2, wie bspw. in der Gondel 11 eine Betriebssteuerung 20, eine Notstrombatterie 21, und in der Nabe des Windrotors 12 eine Rotorblattverstelleinheit 22 sowie eine Rotorblattheizung 23. Diese Komponenten 2 sind über ein Eigenbedarfsnetz 3 zu deren Versorgung verbunden. Das Eigenbedarfsnetz 3 wird wiederum versorgt aus der Speiseleitung 16 mittels einer Eigenbedarfssteuerung 6, die ein Widerstandsmodul 4, eine Steuerschaltung 7 und einen Spannungsbegrenzungsregler 8 umfasst (s. Fig. 5).

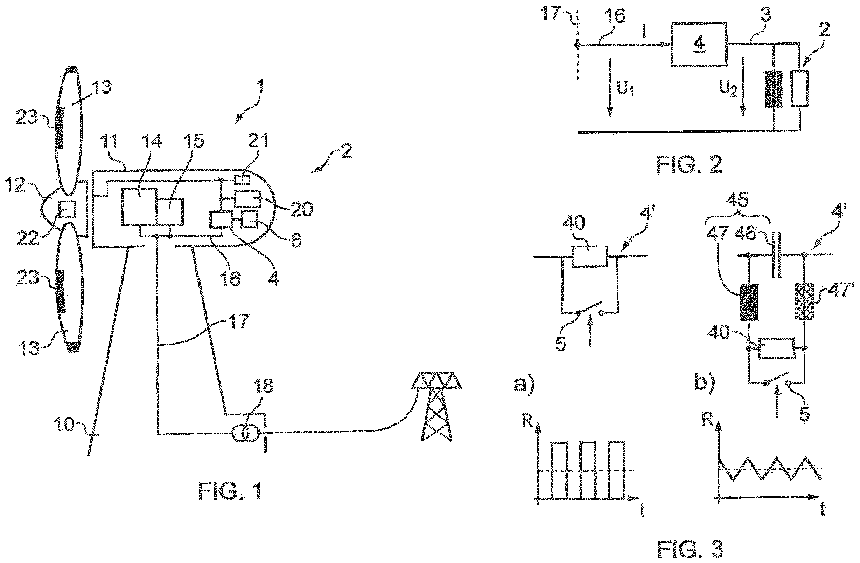

Die elektrische Anschaltung des Widerstandsmoduls 4 ist in einem Ersatzschaltbild in Fig. 2 visualisiert. An einem Eingang des Widerstandsmoduls 4 ist die Speiseleitung 16 angelegt, welche an die Anschlussleitung 17 angeschlossen ist und von dort mit einer Spannung U1 gespeist ist. Am Ausgang des Widerstandsmoduls 4 ist das Eigenbedarfsnetz 3 zur Versorgung der elektrischen Komponenten 2 angeschlossen, wobei letztere hier durch ihre ohmschen und induktive Lasten symbolisiert sind. Im Eigenbedarfsnetz herrscht die Spannung U2, deren Höhe in Abhängigkeit von der Höhe der Eingangsspannung U1 bestimmt ist durch das Verhältnis des Widerstandsmoduls 4 einerseits und Impedanzen der Komponenten 2 andererseits.

In Fig. 3a, b sind verschiedene Ausführungsformen für das Widerstandsmodul 4 dargestellt. In Fig. 3a ist eine einfachen Variante 4' für ein variables Widerstandsmodul dargestellt. Es ist doppelpfadig ausgeführt, wobei an einem in der Darstellung oberen Widerstandspfad ein Serienwiderstand 40 angeordnet ist. Der Serienwiderstand 40 ist vorzugsweise als ein Widerstand mit einem festen Wert (Fest-Widerstand) ausgeführt. Dem Widerstandspfad parallel geschaltet ist als unterer Pfad ein Schaltpfad, in dem ein steuerbarer elektronischer Schalter 5 angeordnet ist. Durch Betätigen des Schalters kann somit der Serienwiderstand 40 überbrückt werden. Damit ist der Gesamtwiderstand des Widerstandsmoduls 4' veränderlich, und zwar je nach Betätigung des elektronischen Schalters 5. Wird bspw. der elektronische Schalter mit einem Rechtecksignal angesteuert, so ergibt sich der in dem zweiten Diagramm von Fig. 3b dargestellte Verlauf über der Zeit. Die gestrichelte Linie zeigt hierbei den sich somit ergebenden zeitlichen Mittelwert an. Indem das ansteuernde Rechtecksignal als ein Pulsweitensignal (PWM) ausgeführt ist, kann somit der sich insgesamt ergebende Widerstand des variablen Widerstandsmoduls 4' stufenlos eingestellt werden zwischen einem Widerstandswert von 0 Ω (bei einem Tastverhältnis von 100 %) bis zu einem maximalen Widerstand, der dem Nennwert des Serienwiderstands 40 entspricht (beim Tastverhältnis von 0 %, mithin also nicht betätigtem Schalter).

In Fig. 3b ist das Widerstandsmodul in einer weiteren variablen Variante dargestellt, die auf der in Fig. 3a dargestellten Variante 4' aufbaut und zusätzlich einen LC-Filter 45 vorsieht. Hierbei ist ein dritter Pfad vorgesehen, in welchem ein Kondensator 46 des LC-Filters parallelgeschaltet ist. In der Verbindung zwischen dem dritten Pfad und dem Widerstandspfad ist eine Induktivität 47 angeordnet. Das LC-Filter 45 führt zu einer Dämpfung der durch die Betätigung des Schalters hervorgerufenen Schwingungen und fungiert zusätzlich als Energiespeicher. Es ergibt sich somit der in dem zweiten Diagramm dargestellte Verlauf des Widerstands über der Zeit. Man erkennt, dass sich bei Einstellung desselben Tastverhältnisses wie in dem Beispielfall gemäß Fig. 3a der gleiche mittlere Widerstand (siehe gestrichelte Linie) ergibt, jedoch bei erheblich geringeren Amplitudenwerten des tatsächlichen momentanen Widerstands. Das Schaltverhalten dieses variablen Widerstandsmoduls 4 ist somit erheblich ruhiger. Wie auch bei der Variante 4' kann durch Einstellen des Tastverhältnisses der Widerstandswert zwischen 0 Ω (Tastverhältnis 100 %) bis hin zu dem Nennwiderstand des Serienwiderstands 40 (Tastverhältnis 0 %) eingestellt werden.

Verschiedene Konfigurationen für den elektronischen Schalter 5 sind in Fig. 4 dargestellt. Zur Übersichtlichkeit ist der Widerstandspfad mit dem Widerstand 40 in gestrichelter Linie jeweils zusätzlich dargestellt. In der Ausführungsform gemäß Fig. 4a weist der elektronische Schalter 5 zwei Stromventile, wie GTO oder IGCT, auf. Sie sind in Anti-Parallelschaltung angeordnet. Diese Anordnung bietet den Vorzug konzeptioneller Einfachheit. In Fig. 4b ist eine Ausführung dargestellt, die einen Brückengleichrichter 53 und nur ein Schaltelement 54 aufweist, das bspw. als ein IGBT ausgeführt ist. Dem IGBT 54 zugeordnet ist eine gegensinnig geschaltete Diode 55. Aufgrund des Brückengleichrichters 53 bietet diese Schaltung den Vorteil, dass sie mit lediglich einem aktiven Schaltelement auskommt. Hierzu kann ein IGBT verwendet werden, wodurch der volle Modulationsbereich ausgenutzt werden kann. Eine Variante der in Fig. 4b dargestellten Schaltung ist in Fig. 4c enthalten. Hierbei ist die Anordnung des Widerstands 40 verändert. Hierbei ist der Brückengleichrichter 53 nicht mehr zwischen dem Widerstand 40 und dem IGBT 54 angeordnet, sondern der Brückengleichrichter 53 ist dem Widerstand 40 vorgeschaltet und damit auch dem Schaltelement 54. Der Stromfluss durch den Widerstand 40 erfolgt somit nur in eine Richtung.

In Fig. 4d ist eine Variante dargestellt, bei welcher zwei IGBTs 56, 57 in Anti-Parallelschaltung vorgesehen sind. Der Strom fließt jeweils durch einen der IGBTs 56, 57 und die jeweils diagonal gegenüberliegende Diode 55, 55', die dementsprechend ebenfalls gegensinnig angeordnet sind. Diese Schaltung bietet den Vorzug, dass sie ohne Brückengleichrichter auskommt und somit einfach im Aufbau ist, jedoch anders als bei der in Fig. 4a dargestellten Schaltung den vollen Modulationsbereich aufweist.

Eine Steuerschaltung 7 sowie ein Spannungsbegrenzungsregler 8 zur Generierung des PWM-Ansteuersignals für den elektronischen Schalter 5 sind in Fig. 5 dargestellt. Der Spannungsbegrenzungsregler 8 weist ein Differenzglied 81 an seinem Eingang auf, an das Signale für eine Referenzspannung Uref und für die gemessene Ist-Spannung Uist im Eigenbedarfsnetz 3 angelegt sind. Als Wert für die Referenzspannung Uref wird die maximal zulässige Spannung im Eigenbedarfsnetz 3 herangezogen, welche üblicherweise 115 % der Nennspannung beträgt. Im Fall einer Überspannung soll die Spannung im Eigenbedarfsnetz 3 auf diesen Referenzwert als Maximalwert eingeregelt werden. Die von dem Differenzglied 81 berechnete Regeldifferenz wird dem Eingang eines Regelkerns 82 zugeführt, der als ein PI-Regler ausgeführt ist. Ihm nachgeschaltet ist ein Begrenzungsglied 83, welches eine Begrenzung des Ausgangssignals von dem PI-Glied vornimmt. Das Signal ist danach an einen Ausgangsverstärker 84 angeschlossen, welcher entsprechend eine Stellgröße aus dem Regler 8 ausgibt. Die Stellgröße ist angelegt an einen Eingang der Steuerschaltung 7. Von diesem Eingang ist es geführt zu einem Summierglied 71. An dessen anderen Eingang ist ein Anschluss eines Hochfrequenzwechselspannungsgenerators 72 angeschlossen. Der Hochfrequenzwechselspannungsgenerator 72 ist zur Abgabe einer vorzugsweise sägezahnförmigen Wechselspannung in einem Bereich von einigen Kilohertz, bspw. 5 kHz ausgebildet. Der andere Anschluss des Hochfrequenzwechselspannungsgenerators 72 ist an einen negativen Anschluss eines Operationsverstärkers 73 angeschlossen. An einen positiven Anschluss des Operationsverstärkers 72 ist das von dem Summierglied 71 berechnete Summensignal angeschlossen. Der Operationsverstärker 72 verstärkt somit das von dem Hochfrequenzwechselspannungsgenerator 72 erzeugte Signal, wobei abhängig von dem Ausgangssignal des Spannungsreglers 8 ein Offset über das Summierglied 71 hinzugefügt wird. Das von dem Operationsverstärker 73 somit abgegebene rechteckförmige Ausgangssignal ist an den Steueranschluss des IGBT 54 des elektronischen Schalters 5 angeschlossen. Damit wird der elektronische Schalter 5 entsprechend getaktet betätigt. Dabei ist die Ansteuerung so ausgelegt, dass der elektronische Schalter 5 in Ruhestellung geschlossen ist und so den Widerstand 40 überbrückt. Ferner ist eine Rückführleitung 74 vorgesehen, die von einem Anschluss des IGBT zurückführt zu demjenigen Eingang des Summierglieds 71, an dem der eine Pol des Hochfrequenzwechselspannungsgenerators 72 angeschlossen ist.

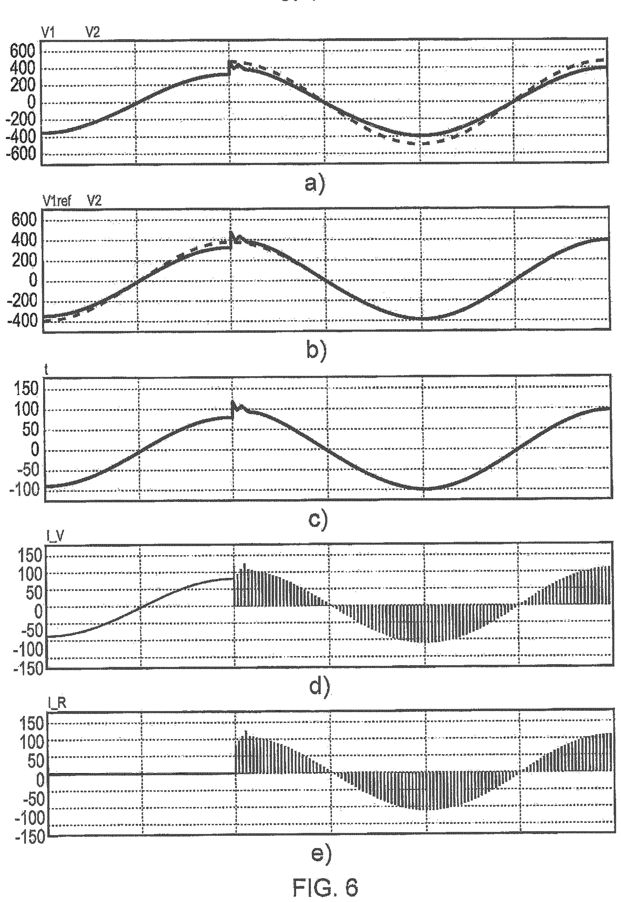

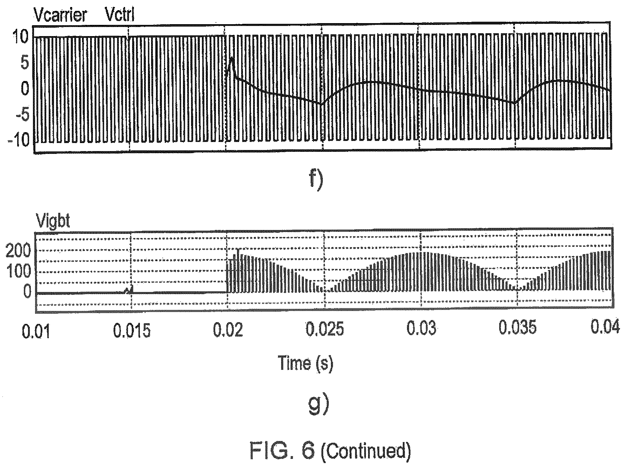

Das sich so ergebende Betriebsverhalten ist in Fig. 6 dargestellt. In Fig. 6a sind die Spannungen U1 (gestrichelte Linie) und U2 (durchgezogene Linie) dargestellt. In Fig. 6b ist die maximal zulässige Referenzspannung Vref (gestrichelte Linie) und wiederum die Spannung U2 im Eigenbedarfsnetz 3 (durchgezogene Linie) dargestellt. In Fig. 6c ist der Stromfluss I dargestellt. Im Diagramm 6d ist der Stromfluss durch den Schaltpfad mit dem elektronischen Schalter 5 und in Fig. 6e ist der Stromfluss durch den Widerstandspfad mit dem Widerstand 40 dargestellt. In Fig. 6f sind die von dem Hochfrequenzwechselspannungsgenerator 72 erzeugte hochfrequente Wechselspannung (mit kontanter Amplitude) und die von dem Spannungsbegrenzungsregler 8 ausgegebene Stellgröße, welche an die Steuerschaltung 7 angelegt ist, dargestellt. Die Spannung über dem IGBT 54 und damit ein Maß für dessen Einschaltverhalten ist in Fig. 6g dargestellt. Man erkennt, dass es zum Zeitpunkt t=0,02s zu einem Überspannungsereignis im Netz kommt, wodurch ein sprungartiger Anstieg der Spannung U1 hervorgerufen wird. Sowie die Spannung U2 im Eigenbedarfsnetz 3 den Referenzwert Ulref übersteigt (siehe. Fig. 6b), spricht der Spannungsbegrenzungsregler 8 an und verändert sein als Stellgröße an die Steuerschaltung 7 angelegtes Signal (siehe in Fig. 6f das Absinken der durchgezogenen Linie bis in den Bereich um die Nulllinie). Damit wird veranlasst, dass die Steuerschaltung 7 den IGBT ansteuert (siehe Fig. 6g), wodurch der IGBT betätigt wird und der Schaltpfad geöffnet wird, sodass der Strom durch den Widerstandspfad mit dem Widerstand 40 fließt (siehe Fig. 6e). Der sich dadurch ergebende Spannungsabfall wird durch das LC-Filter 45 des variablen Widerstandsmoduls 4 geglättet, sodass sich schließlich der in seiner Amplitude verringerte Verlauf für die Spannung U2 im Eigenbedarfsnetz ergibt, wie er in Fig. 6a dargestellt ist. Man erkennt, dass die Spannung im Eigenbedarfsnetz deutlich niedriger liegt als die aufgrund des Überspannungsereignisses überhöhte Spannung U1 im Netz. Tatsächlich wird, wie in Fig. 6b gezeigt, nach ausgesprochen kurzer Zeit von nur 1 bis 2 ms die Spannung U2 im Eigenbedarfsnetz auf den vorgesehenen Referenzwert eingeregelt.

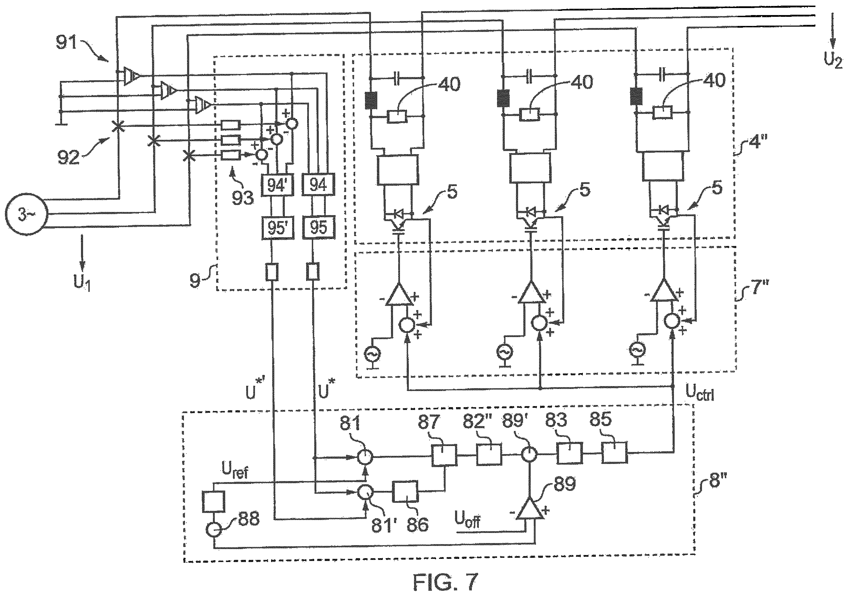

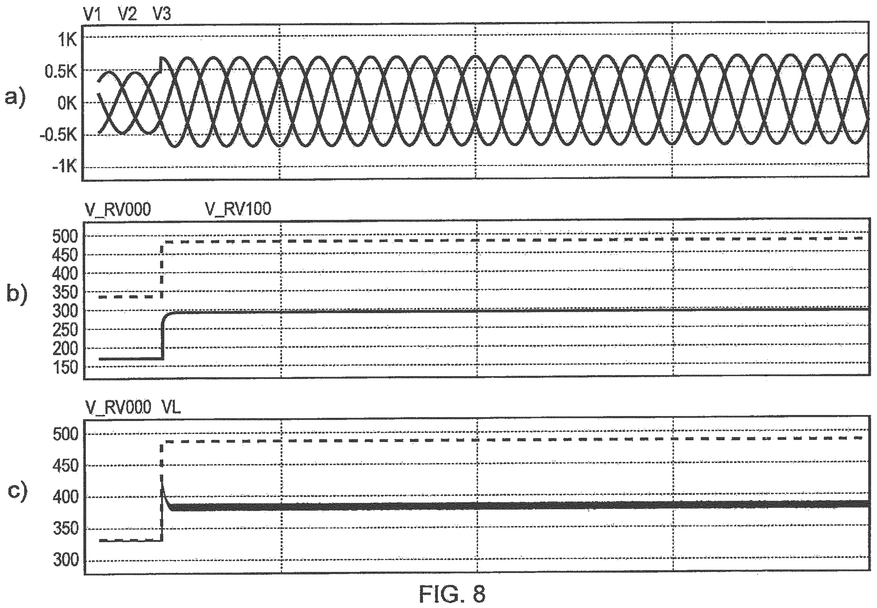

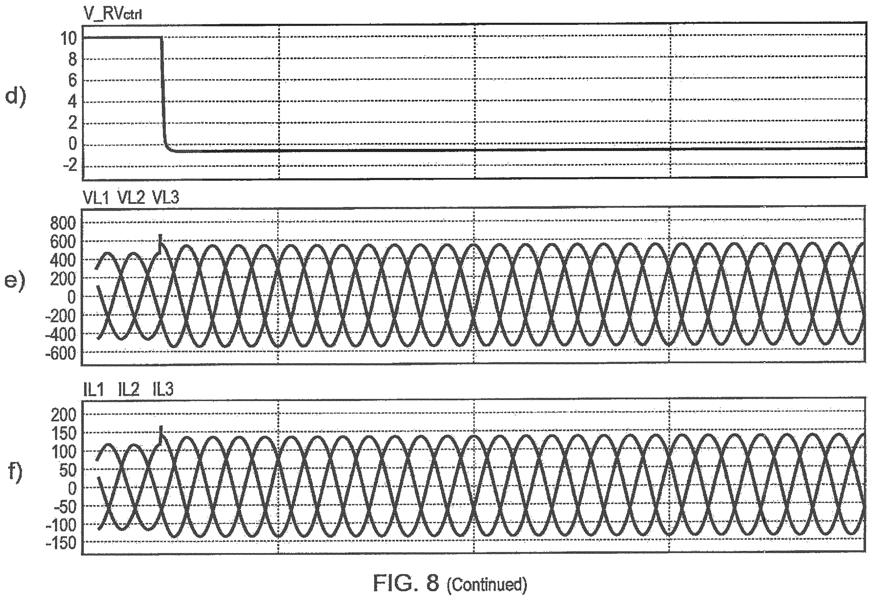

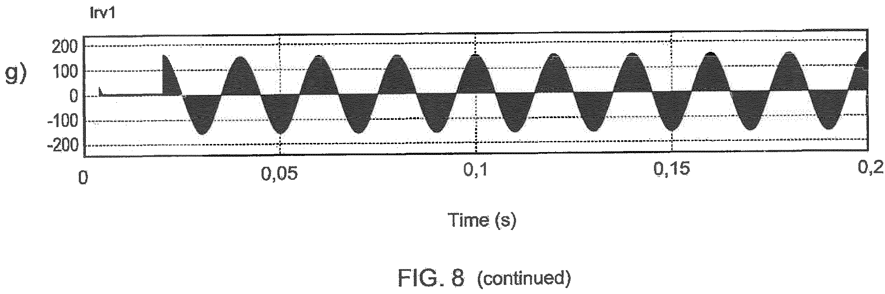

Während die Figuren 5 und 6 ein einphasiges Anwendungsbeispiel zeigen, ist in den Figuren 7 und 8 ein dreiphasiges Anwendungsbeispiel dargestellt. Gleichartige Elemente sind mit entsprechenden Bezugsziffern wie in den Figuren 5 und 6 versehen. Die Widerstandsmodule für die drei Phasen sind in dem Block 4" enthalten, die Steuerschaltungen für die drei Phasen in dem Block 7". Ferner ist der Spannungsbegrenzungsregler 8" vorgesehen. Er unterscheidet sich von dem in Fig. 5 dargestellten Spannungsbegrenzungsregler 8 im Wesentlichen dadurch, dass er zusätzlich einen Eingang für einen Spannungszeiger aufweist. Zusätzlich umfasst die in Fig. 7 dargestellte Ausführungsform eine mehrphasige Spannungsmesseinrichtung 9. Sie ist dazu ausgebildet, basierend auf Messwerten für Strom und Spannung an den drei Phasen des Drehstromsystems einen umlaufenden Spannungszeiger zu erzeugen. Dazu sind Spannungsmesssensoren 91 an den drei Phasen sowie Strommesseinrichtungen 92 ebenfalls an den drei Phasen vorgesehen. Erstgenannte bilden Signale für einen Leerlaufspannungszeiger U*. Die Signale letzterer sind angelegt an eine Multiplikatorstufe 93, die eine Vervielfachung um einen einheitlichen Faktor k vornimmt. Dieser ist so gewählt, dass er ein Maß für einen Spannungsabfall bildet, gemäß der Beziehung ΔU = R * I; durch Subtraktion (Elemente 93') werden so Signale für einen Lastspannungszeiger U*' gebildet. Sie werden zugeführt einer ersten Wandlungsstufe 94, 94', welche aus dem Dreiphasensystem eine Koordinatenwandlung in ein zweiparametriges kartesisches Polarkoordinatensystem vornimmt. Der Koordinatenwandlung nachgeschaltet ist ein Konversionsmodul 95, 95' zur Bestimmung einer komplexen Darstellung in Polarkoordinaten für die Spannungszeiger U*, U*'. Diese werden als Ausgangssignal von der mehrphasigen Spannungsmesseinrichtung 9 ausgegeben. Das Signal für den Leerlaufspannungszeiger U* ist angelegt an Differenzglieder 81, 81' am Eingang des Reglers 8". An den anderen Eingang des Differenzglieds 81 ist, wie bei dem in Fig. 6 dargestellten Regler, das Ausgangssignal eines Referenzspannungsgenerators 88 Uref angeschlossen. An das zusätzliche Differenzglied 81' ist ferner der Lastspannungszeiger U*' angeschlossen. Das von diesem zusätzlichen Differenzglied 81' berechnete Signal ist einem Begrenzer 86 zugeführt, von dem aus es dem Nennereingang eines Divisionsglieds 87 zugeführt ist. An dem Zählereingang des Divisionsglieds 87 ist das Ausgangssignal des Summierglieds 81 angeschlossen. Nachgeschaltet ist ein Verstärkungsglied 82" zur Bildung eines P-Regelblocks. Es ist somit eine lastgeführte Regelung mit einer Vorsteuerung durch den Lastspannungszeiger U*' gebildet. Sie kommt ohne einen I-Anteil aus, und ist daher robust und schnell. Das Ausgangssignal ist an einem Eingang eines Summierglieds 89' angeschlossen, an dessen anderem Eingang der Ausgang eines Offsetmoduls 89 angeschlossen ist. Das Offsetmodul 89 ist dazu ausgebildet, den von dem anderen Pol des Referenzspannungsgenerators 88 erzeugten Wert für die Referenzspannung um einen wählbaren Offsetbetrag Uoff zu verschieben. Als Ausgangsstufe des Spannungsbegrenzungsreglers 8" fungieren ein weiterer Limiter 83 sowie ein Tiefpass 85. Dessen Ausgang wird als Stellgröße UCRTL ausgegeben und, wie auch in Fig. 5, an den Eingangsanschluss der Steuerschaltung 7" angelegt.

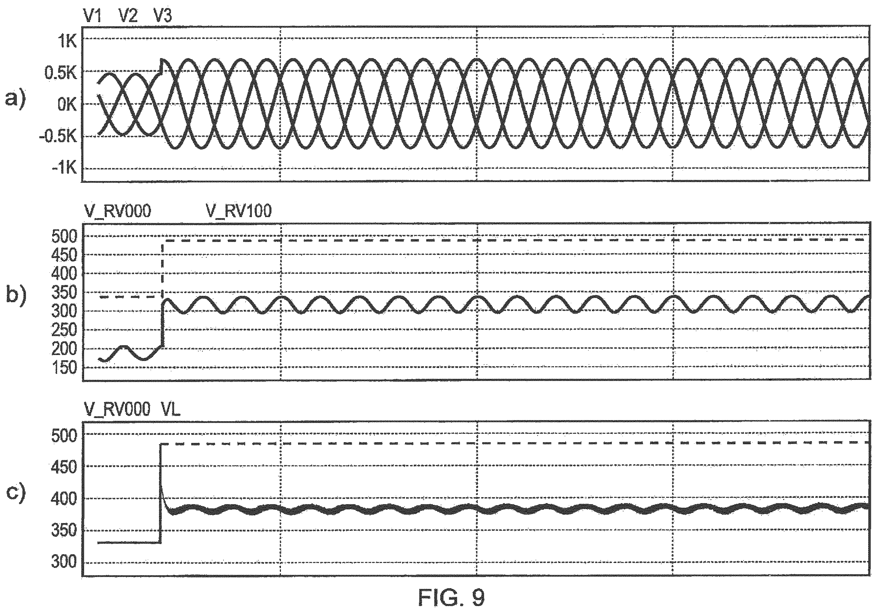

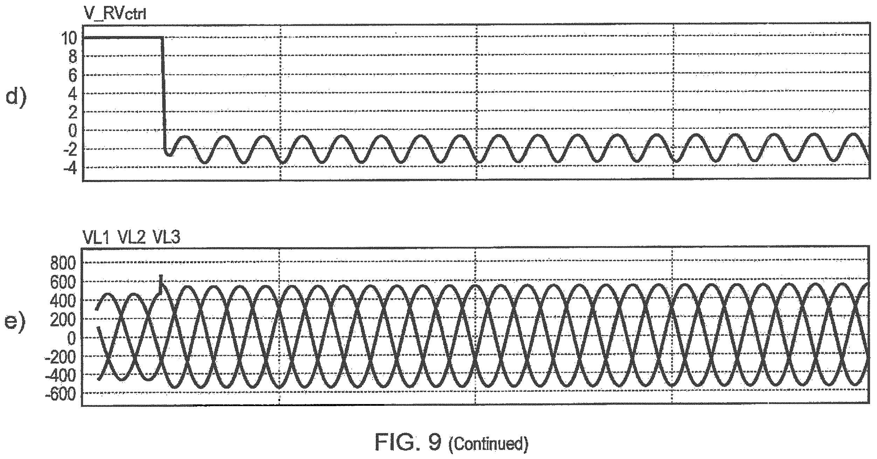

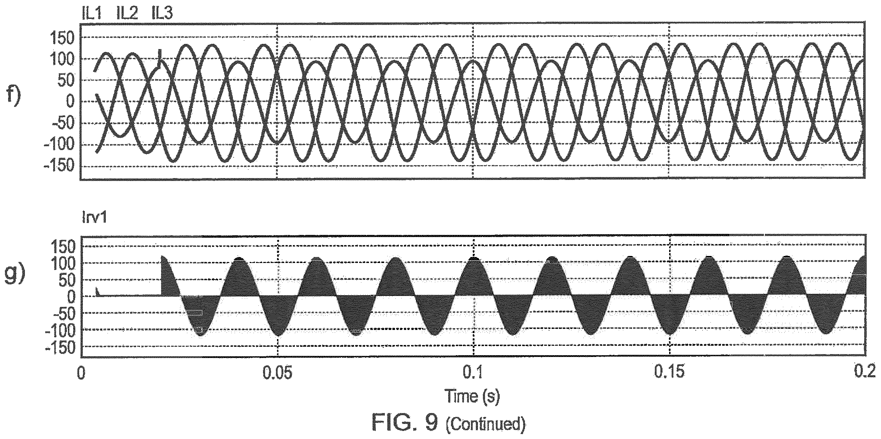

Durch den drehenden Spannungszeiger kann sowohl auf symmetrische wie auch auf asymmetrische Fehler optimal reagiert werden. Dies sei anhand der Bilder in den Figuren 8 und 9 erläutert. In Fig. 8 ist das Verhalten bei einem symmetrischen Überspannungsereignis dargestellt. Die drei Phasen der Eingangsspannungen sind in Fig. 8a gezeigt. In Fig. 8b sind der sich daraus ergebende Spannungszeiger U* für die Eingangsspannung (in gestrichelter Linie) und der Wert des Lastspannungszeigers U*' (durchgezogene Linie) dargestellt. In Fig. 8c sind wieder der Spannungszeiger U* (gestrichelte Linie) und der sich für die Ausgangsspannung einstellende Wert (durchgezogene Linie) dargestellt. Fig. 8d zeigt den Wert der von dem Spannungsbegrenzungsregler 8" ausgegebenen Stellgröße, wobei der in der linken Bildhälfte dargestellte obere Wert für eine Deaktivierung (Ruhestellung) des elektronischen Schalters 5 in dem variablen Widerstandsmodul 4" steht.

Die drei Phasen der Ausgangsspannung U2 sind dargestellt in Fig. 8e, und der sich dabei einstellende Laststrom ist in Fig. 8f für die drei Phasen dargestellt. Der Strom durch den Widerstand 40 des variablen Widerstandsmoduls 4" als Folge der Betätigung des elektronischen Schalters 5 ist in Fig. 8g dargestellt. Zum Zeitpunkt t=0,02s tritt ein Überspannungsereignis auf. Man erkennt, dass die Spannungen deutlich ansteigen. Man erkennt ferner, dass - wie auch bei Fig. 6 - es praktisch sofort zu einer Betätigung des elektronischen Schalters kommt, wodurch der Schalter geöffnet wird und somit der Strom durch den Lastwiderstand 40 getaktet fließt (siehe Fig. 8g). Dadurch kommt es zu einem Spannungsabfall, sodass die Ausgangsspannung (siehe Fig. 8e) deutlich verringert ist gegenüber der überhöhten Eingangsspannung (vgl. Fig. 8a und 8c) .

In Fig. 9 ist dieselbe Darstellung für den Fall eines Überspannungsereignisses mit asymmetrischer Last dargestellt. Die Diagramme 9 a bis g entsprechen in ihrer Darstellung den Diagrammen 8 a bis g. Man erkennt, dass aufgrund der asymmetrischen Last die Ströme in den einzelnen Phasen verschieden hoch sind (siehe Fig. 9f). Dadurch kommt es auch zu einer über die Phasen hinweg unterschiedlichen Aktivität der elektronischen Schalter 5, gesteuert durch ein entsprechendes mit dreifacher Netzfrequenz oszillierendes Signal der von dem Spannungsregler 8" ausgegebenen Stellgröße (siehe Fig. 9d). Die sich dadurch ergebende Ausgangsspannung U2 weist, wie aus Fig. 9c deutlich wird, eine resultierende Welligkeit auf. Sie ist jedoch betragsmäßig verhältnismäßig klein, was sich auch in Fig. 8e entsprechend zeigt, wo die Höhe der einzelnen Phasen nunmehr in der Folge einander angeglichen ist. Das Ausführungsbeispiel der Erfindung erreicht somit nicht nur, dass die Spannung im Eigenbedarfsnetz 3 unterhalb des zulässigen Grenzwerts bleibt, sondern auch einen Ausgleich der asymmetrischen Lastsituation.

## Patentansprüche

1. Windenergieanlage mit einem Windrotor (12), einem davon angetriebenen Generator (14) zur Erzeugung elektrischer Leistung und einer Anschlussleitung (17) zur Abgabe der elektrischen Leistung an ein Netz (19), weiter umfassend ein Eigenbedarfsnetz (3), das über eine Speiseleitung (16) aus der Anschlussleitung (17) gespeist ist und eine Eigenbedarfssteuerung (6) zur Steuerung der Spannung im Eigenbedarfsnetz aufweist, sowie von dem Eigenbedarfsnetz versorgte elektrisch betriebene Komponenten (2) der Windenergieanlage,
**dadurch gekennzeichnet, dass**
in der Speiseleitung (16) ein Widerstandsmodul (4) vorgesehen ist, welches zwischen Anschlussleitung (17) und Eigenbedarfsnetz (3) angeschlossen und mehrpfadig ausgeführt ist sowie einen Widerstandspfad mit einem Serienwiderstand (40) und einen parallelen Schaltpfad mit einem steuerbaren elektronischen Schalter (5) umfasst, der zur Betätigung in einem Überspannungszustand und zur Überbrückung des Serienwiderstands (40) in einem Ruhezustand ausgebildet ist.

2. Windenergieanlage nach Anspruch 1,
**dadurch gekennzeichnet, dass**
eine Steuerschaltung (7) vorgesehen ist, welche den elektronischen Schalter (5) moduliert ansteuert, insbesondere mittels Pulsweitenmodulation (PWM).

3. Windenergieanlage nach Anspruch 1 oder 2,
**dadurch gekennzeichnet, dass**
der Steuerschaltung (7) ein Spannungsbegrenzungsregler (8) vorgeschaltet ist.

4. Windenergieanlage nach einem der vorangehenden Ansprüche,
**dadurch gekennzeichnet, dass**
das Widerstandsmodul (4) einen weiteren parallelgeschalteten Pfad mit einem LC-Glättungsfilter (45) aufweist.

5. Windenergieanlage nach einem der Ansprüche 3 bis 4,
**dadurch gekennzeichnet, dass**
der Spannungsbegrenzungsregler (8) eine schnelle Regelung umfasst, die eine Zeitkonstante kürzer als eine Periode der Netzfrequenz aufweist.

6. Windenergieanlage nach einem der Ansprüche 3 bis 5,
**dadurch gekennzeichnet, dass**
der Spannungsbegrenzungsregler (8) eine Vorsteuerung aufweist, an deren Eingang ein Signal für einen Stromfluss in das Eigenbedarfsnetz (3) angelegt ist.

7. Windenergieanlage nach Anspruch 6,
**dadurch gekennzeichnet, dass**
der Spannungsbegrenzungsregler (8) mit einer großen Zeitkonstante ausgeführt ist, die größer ist als die Periode einer Netzschwingung.

8. Windenergieanlage nach einem der vorangehenden Ansprüche,
**dadurch gekennzeichnet, dass**
für jede Phase eines Mehrphasensystems ein eigenes Widerstandsmodul (4) vorgesehen ist, wobei vorzugsweise die Widerstandsmodule (4) von einem gemeinsamen Spannungsbegrenzungsregler (8) angesteuert sind.

9. Windenergieanlage nach einem der vorangehenden Ansprüche,
**dadurch gekennzeichnet, dass**
eine mehrphasige Spannungsmesseinrichtung (9) vorgesehen ist, die zur Bildung eines umlaufenden Spannungszeigers ausgebildet ist, der vorzugsweise einen Leerlaufspannungszeiger (U*) und einen lastabhängigen Spannungszeiger (U*') umfasst.

10. Windenergieanlage nach einem der vorangehenden Ansprüche,
**dadurch gekennzeichnet, dass**
die Spannungsbegrenzungsregelung (8) einen Oberschwingungsfilter (85) aufweist.

11. Windenergieanlagen-Eigenbedarfssteuerung zur Versorgung eines Eigenbedarfsnetzes (3) zur Versorgung elektrischer Komponenten einer Windenergieanlage mit einem Windrotor (12), einem davon angetriebenen Generator (14) zur Erzeugung elektrischer Leistung und einer Anschlussleitung (17) zur Abgabe der elektrischen Leistung an ein Netz (19) sowie einer Speiseleitung (16) zwischen der Anschlussleitung (17) und dem Eigenbedarfsnetz,
**dadurch gekennzeichnet, dass**
die Windenergieanlagen-Eigenbedarfssteuerung ein zur Anordnung in der Speiseleitung (16) ausgebildetes Widerstandsmodul (4) umfasst, das mehrpfadig ausgeführt ist und einen Widerstandspfad mit einem Serienwiderstand (40) und einen parallelen Schaltpfad mit einem steuerbaren elektronischen Schalter (5) aufweist, der zur Betätigung in einem Überspannungszustand und zur Überbrückung des Serienwiderstands (40) in einem Ruhezustand ausgebildet ist.

12. Windenergieanlagen-Eigenbedarfssteuerung nach Anspruch 11, **dadurch gekennzeichnet, dass** sie nach einem der Ansprüche 2 bis 10 weitergebildet ist.

13. Verfahren zur Steuerung der Spannung in einem Eigenbedarfsnetz einer Windenergieanlage zur Versorgung von deren elektrischen Komponenten, wobei die Windenergieanlage mit einem Windrotor, einem davon angetriebenen Generator zur Erzeugung elektrischer Leistung, einer Anschlussleitung zur Abgabe der elektrischen Leistung an ein Netz und einer Speiseleitung zur Versorgung des Eigenbedarfsnetzes versehen ist,
**gekennzeichnet durch**
Anordnen eines Widerstandsmoduls in der Speiseleitung zwischen der Anschlussleitung der Windenergieanlage und dem Eigenbedarfsnetz, wobei das Widerstandsmodul mehrpfadig ausgeführt ist und einen Widerstandspfad mit einem Serienwiderstand und einen parallelen Schaltpfad mit einem steuerbaren elektronischen Schalter aufweist,
Betätigen des steuerbaren elektronischen Schalters während eines Überspannungszustands und Überbrücken des Serienwiderstands in einem Ruhezustand.

14. Verfahren nach Anspruch 13, **gekennzeichnet durch** moduliertes Ansteuern des steuerbaren elektronischen Schalters.

15. Verfahren nach Anspruch 13, **dadurch gekennzeichnet, dass** es nach einem der Ansprüche 3 bis 10 weitergebildet ist.

## Claims

1. Wind energy installation having a wind rotor (12), a generator (14) which is driven by the latter and is intended to generate electrical power, and a connection line (17) for delivering the electrical power to a network (19), also comprising an intrinsic requirement network (3) which is fed from the connection line (17) via a feed line (16) and has an intrinsic requirement controller (6) for controlling the voltage in the intrinsic requirement network, as well as electrically operated components (2) of the wind energy installation which are supplied by the intrinsic requirement network,
**characterized in that**
a resistance module (4) is provided in the feed line (16), which resistance module is connected between the connection line (17) and the intrinsic requirement network (3), has a multipath design and comprises a resistance path with a series resistor (40) and a parallel switching path with a controllable electronic switch (5) which is designed for actuation in an overvoltage state and is designed to bridge the series resistor (40) in an idle state.

2. Wind energy installation according to Claim 1,
**characterized in that**
a control circuit (7) is provided and controls the electronic switch (5) in a modulated manner, in particular by means of pulse width modulation (PWM).

3. Wind energy installation according to Claim 1 or 2,
**characterized in that**
a voltage limitation regulator (8) is connected upstream of the control circuit (7).

4. Wind energy installation according to one of the preceding claims,
**characterized in that**
the resistance module (4) has a further path which is connected in parallel and has an LC smoothing filter (45) .

5. Wind energy installation according to one of Claims 3 to 4,
**characterized in that**
the voltage limitation regulator (8) comprises a fast regulation system which has a time constant shorter than a period of the network frequency.

6. Wind energy installation according to one of Claims 3 to 5,
**characterized in that**
the voltage limitation regulator (8) has a pilot controller, to the input of which a signal for a flow of current into the intrinsic requirement network (3) is applied.

7. Wind energy installation according to Claim 6,
**characterized in that**
the voltage limitation regulator (8) is designed with a large time constant which is greater than the period of a network oscillation.

8. Wind energy installation according to one of the preceding claims,
**characterized in that**
a separate resistance module (4) is provided for each phase of a multiphase system, wherein the resistance modules (4) are preferably controlled by a common voltage limitation regulator (8).

9. Wind energy installation according to one of the preceding claims,
**characterized in that**
a multiphase voltage measuring device (9) is provided and is designed to form a rotating voltage phasor which preferably comprises an open-circuit voltage phasor (U*) and a load-dependent voltage phasor (U*').

10. Wind energy installation according to one of the preceding claims,
**characterized in that**
the voltage limitation regulator (8) has a harmonic filter (85).

11. Wind energy installation intrinsic requirement controller for supplying an intrinsic requirement network (3) for supplying electrical components of a wind energy installation having a wind rotor (12), a generator (14) which is driven by the latter and is intended to generate electrical power, and a connection line (17) for delivering the electrical power to a network (19), as well as a feed line (16) between the connection line (17) and the intrinsic requirement network,
**characterized in that**
the wind energy installation intrinsic requirement controller comprises a resistance module (4) which is designed to be arranged in the feed line (16), has a multipath design and has a resistance path with a series resistor (40) and a parallel switching path with a controllable electronic switch (5) which is designed for actuation in an overvoltage state and is designed to bridge the series resistor (40) in an idle state.

12. Wind energy installation intrinsic requirement controller according to Claim 11, **characterized in that** it is developed according to one of Claims 2 to 10.

13. Method for controlling the voltage in an intrinsic requirement network of a wind energy installation for the purpose of supplying the electrical components thereof, wherein the wind energy installation is provided with a wind rotor, a generator which is driven by the latter and is intended to generate electrical power, a connection line for delivering the electrical power to a network and a feed line for supplying the intrinsic requirement network,
**characterized by**
arrangement of a resistance module in the feed line between the connection line of the wind energy installation and the intrinsic requirement network, wherein the resistance module has a multipath design and has a resistance path with a series resistor and a parallel switching path with a controllable electronic switch, actuation of the controllable electronic switch during an overvoltage state and bridging of the series resistor in an idle state.

14. Method according to Claim 13, **characterized by** control of the controllable electronic switch in a modulated manner.

15. Method according to Claim 13, **characterized in that** it is developed according to one of Claims 3 to 10.

## Revendications

1. Aérogénérateur comprenant un rotor éolien (12), un générateur (14) entraîné par celui-ci pour générer de la puissance électrique et un câble de raccordement (17) destiné à délivrer la puissance électrique à un réseau (19), comprenant en outre un réseau de consommation propre (3) qui est alimenté depuis le câble de raccordement (17) par le biais d'un câble d'alimentation (16) et possède une commande de consommation propre (6) destinée à commander la tension dans le réseau de consommation propre, ainsi que des composants (2) de l'aérogénérateur à fonctionnement électrique qui sont alimentés par le réseau de consommation propre,
**caractérisé en ce que**
un module résistif (4) se trouve dans le câble d'alimentation (16), lequel est raccordé entre le câble de raccordement (17) et le réseau de consommation propre (3) et est réalisé à voies multiples et comporte une voie résistive avec une résistance série (40) et une voie de commutation parallèle avec un commutateur électronique (5) commandable qui est configuré pour être actionné dans un état de surtension et pour court-circuiter la résistance série (40) dans un état de repos.

2. Aérogénérateur selon la revendication 1, **caractérisé en ce qu'**un circuit de commande (7) est présent, lequel pilote le commutateur électronique (5) de manière modulée, notamment au moyen d'une modulation d'impulsions en largeur (PWM).

3. Aérogénérateur selon la revendication 1 ou 2, **caractérisé en ce qu'**un régulateur de limitation de tension (8) est branché en amont du circuit de commande (7).

4. Aérogénérateur selon l'une des revendications précédentes, **caractérisé en ce que** le module résistif (4) possède une voie branchée en parallèle supplémentaire comprenant un filtre de lissage LC (45) .

5. Aérogénérateur selon l'une des revendications 3 à 4, **caractérisé en ce que** le régulateur de limitation de tension (8) comporte une régulation rapide qui possède une constante de temps plus courte qu'une période de la fréquence du réseau.

6. Aérogénérateur selon l'une des revendications 3 à 4, **caractérisé en ce que** le régulateur de limitation de tension (8) comporte une commande pilote à l'entrée de laquelle est appliqué un signal pour un flux de courant dans le réseau de consommation propre (3).

7. Aérogénérateur selon la revendication 6, **caractérisé en ce que** le régulateur de limitation de tension (8) est réalisé avec une constante de temps élevée qui est supérieure à la période d'une oscillation du réseau.

8. Aérogénérateur selon l'une des revendications précédentes, **caractérisé en ce qu'**un module résistif (4) est présent pour chaque phase d'un système polyphasé, les modules résistifs (4) étant de préférence commandés par un régulateur de limitation de tension (8) commun.

9. Aérogénérateur selon l'une des revendications précédentes, **caractérisé en ce qu'**un dispositif de mesure de tension polyphasé (9) est présent, lequel est configuré pour former un vecteur de tension tournant, lequel comporte de préférence un vecteur de tension à vide (U*) et un vecteur de tension dépendant de la charge (U*').

10. Aérogénérateur selon l'une des revendications précédentes, **caractérisé en ce que** le régulateur de limitation de tension (8) possède un filtre à harmoniques (85).

11. Commande de consommation propre d'aérogénérateurs destinée à alimenter un réseau de consommation propre (3) en vue d'alimenter les composants électriques d'un aérogénérateur comprenant un rotor éolien (12), un générateur (14) entraîné par celui-ci pour générer de la puissance électrique et un câble de raccordement (17) destiné à délivrer la puissance électrique à un réseau (19), ainsi qu'un câble d'alimentation (16) entre le câble de raccordement (17) le réseau de consommation propre,
**caractérisée en ce que**
la commande de consommation propre d'aérogénérateurs comporte un module résistif (4) configuré pour être disposé dans le câble d'alimentation (16), lequel est réalisé à voies multiples et comporte une voie résistive avec une résistance série (40) et une voie de commutation parallèle avec un commutateur électronique (5) commandable qui est configuré pour être actionné dans un état de surtension et pour court-circuiter la résistance série (40) dans un état de repos.

12. Commande de consommation propre d'aérogénérateurs selon la revendication 11, **caractérisée en ce qu'**elle est perfectionnée selon l'une des revendications 2 à 10.

13. Procédé pour commander la tension dans un réseau de consommation propre d'un aérogénérateur en vue d'alimenter ses composants électriques, l'aérogénérateur étant pourvu d'un rotor éolien, d'un générateur entraîné par celui-ci pour générer de la puissance électrique, d'un câble de raccordement destiné à délivrer la puissance électrique à un réseau et d'un câble d'alimentation destiné à alimenter le réseau de consommation propre,
**caractérisé par**
disposition d'un module résistif dans le câble d'alimentation entre le câble de raccordement de l'aérogénérateur et le réseau de consommation propre, le module résistif étant réalisé à voies multiples et possédant une voie résistive avec une résistance série et une voie de commutation parallèle avec un commutateur électronique commandable,
actionnement du commutateur électronique commandable pendant un état de surtension et court-circuitage de la résistance série dans un état de repos.

14. Procédé selon la revendication 13, **caractérisé par** le pilotage modulé du commutateur électronique commandable.

15. Procédé selon la revendication 13, **caractérisé en ce qu'**il est perfectionné selon l'une des revendications 3 à 10.
